# EUROPEAN PATENT SPECIFICATION

(11) **EP 1 222 048 B1**
(45) Date of publication and mention of the grant of the patent: **14.01.2004**
(21) Application number: 00958769.2
(22) Date of filing: 29.08.2000
(51) Int. Cl.: B23D 45/12, B23D 45/14

(54) **A PIPE CUTTER AND A METHOD TO CUT A PIPE**
ROHRSCHNEIDVORRICHTUNG UND VERFAHREN ZUM ROHRSCHNEIDEN
DISPOSITIF DE COUPE DE TUYAUX ET PROCEDE POUR COUPER DES TUYAUX

(30) Priority: 18.10.1999 GB 9924421
(43) Date of publication of application: 17.07.2002
(73) Proprietor: Bastow, Bernard Anthony, Leeds, West Yorkshire LS8 1PL (GB)
(72) Inventor: Bastow, Bernard Anthony, Leeds, West Yorkshire LS8 1PL (GB)
(74) Representative: Waddington, Richard
(86) International application number: PCT/GB2000/003296
(87) International publication number: WO 2001/028724

(56) References cited:
- DE-A- 3 802 582
- FR-A- 2 719 253
- US-A- 4 412 401

## Description

The present invention relates to a pipe cutting device. Pipe welding is a key process carried out when preparing pipelines or pipe structures from cut sections of pipe. To improve the strength of the weld between sections, it is generally necessary to prepare a chamfered edge on the pipe sections to be joined together so that suitable welding material may be located in the gap between the trailing edge of the leading pipe and the chamfered edge of the trailing pipe. The providers of cut pipe sections provide pipes with such chamfered edges. Chamfering of the leading edge of the pipe is carried out subsequent to the cutting step and the chamfering procedure generally utilises a grinding disc which is applied, either manually or by use of an automated grinding device, to one of the ends of the cut pipe for example as disclosed in US 4,412,401, which forms the pre-characterising portion of claim 1. Although the chamfered edge is required by the industry, the chamfering process is laborious and adds to the overall cost of the cut pipe section.

According to a first aspect of the resent invention there is provided a pipe cutting device according to claim 1.

The pipe cutting means may be bonded abrasive pipe cutting means.

Preferably, the angle of the central axis of the pipe cutting means is between about 5° and about 85°, wherein 0° would be parallel with a longitudinal axis of a pipe to be cut and wherein 90° would be perpendicular to the said longitudinal axis. A more preferred range of angles for chamfering is between about 10° and about 85°, more preferably, about 30° and about 85°, most preferably about 50° and about 80°. An especially preferred range of angles is about 55° to about 80°.

Advantageously, by using a bonded abrasive pipe cutting means, it has surprisingly been found that it is possible to locate the pipe cutting means so that the axis around which it rotates is at an angle with respect to the central longitudinal axis of the pipe being cut. Ordinarily, with conventional steel cutters such respective angular positioning of the axis of the pipe cutter and the longitudinal axis of the pipe is not possible and would result in damage to the trailing edge of the pipe cutter due to the relative circumferential movement of the pipe cutter around the circumference of the pipe. The damage is caused because the intersection of the planar cutting means at an angle with the curved surface of the pipe results in a cut being made which has two points of contact between cutting means and pipe on

In a preferred embodiment, the pipe is rotated about its central longitudinal axis to provide the said relative circumferential rotation of the pipe cutting means and the pipe. However, it is also envisaged that the rotating pipe cutting means could be itself rotated around the circumference of a static pipe. Preferably, the rotation of the cutting means about its own axis and the rotation of the pipe are in the same direction, either both clockwise or both counter clockwise. Preferably, the pipe cutting means is radially adjustable with respect to the central longitudinal axis of the pipe to the extent necessary to effect cutting through the wall of the pipe.

Typically, the pipe cutting means is a bonded abrasive blade of, typically, disc like construction. Preferably, the blade is fixed to a centrally located shaft which, in turn, rotates in a suitable rotating device such as a motor to effect rotation of the blade. The shaft may be permanently fixed to the blade or may be accommodated in a suitable central hole in the blade and removeably fixed with respect thereto.

In a preferred embodiment, the pipe is supported on roller bearings. Preferably, a series of longitudinally spaced roller bearings are mounted on a pair of spaced parallel extension rails which extend longitudinally with respect to a pipe located thereon. The rails may extend to either side of the cutting means. The pipe is supported by the bearings mounted on the extension rails and the rails may be extended to suit the length of pipe which is supported on them. The distance between the parallel rails may also be adjustable to suit the width of pipe supported thereon. Preferably, a drive wheel engages the pipe and, preferably, urges the pipe against the bearings and is operable to rotate the pipe about its longitudinal axis during the cutting thereof. Where the rails extend to either side of the cutting means, a drive wheel may be located at each side of the cutting means. Preferably, the position of the drive wheel is radially adjustable with respect to the longitudinal axis of the pipe to accommodate different widths of pipe mounted on the support bearings. The axis of rotation of the drive which may be off-parallel with the axis of the pipe to give a lateral force on the pipe, which may result in the pipe being pushed against an end stop on the rails. The end stop may be laterally adjustable.

The cutting means may be located beneath the supporting means, and may be mounted for upward movement towards a pipe to be cut.

The cutting means may be adjustable to vary an angle between a central axis of the pipe and a rotational axis of the cutting means. The angle is preferably adjustable as described above.

The cutting means may comprise two blades, which are preferably mounted parallel to one another and are preferably mounted on a common support. The common support may allow a first blade to cut a pipe at or to a first side of vertical and a second blade to cut a pipe at or to a second side of vertical. The cutting means may include blade selection means.

The cutting means may be operable to be moved towards a pipe along the line of a plane of rotation of the cutting means. Feed means may be provided to move the cutting means along said rotational axis towards a pipe, preferably as a pipe is being cut.

The bonded abrasives for use in the present invention are generally formed as circular discs with the outer edge of the disc providing the cutting surface. The bonded abrasive effectively grinds the pipes during the cutting action and, during use, the abrasive is gradually eroded to be gradually replaced by fresh abrasive located in the bonding material. Due to the grinding action of the bonded abrasive it has been found possible to utilise the bonded abrasive in accordance with the invention without damaging the trailing cutting edge thereof as would be found with a metal blade edge.

Suitable abrasives for use with the bonding abrasives of the present invention include but are not limited to aluminium oxide, silicone carbide, zirconium oxide and aluminium oxide mixtures. Other suitable abrasives will be known to those skilled in the art.

Suitable organic bonding agents for use with the present invention include polymerised synthetic resin, rubber. Other suitable organic bonding agents will be known to those skilled in the art. Suitable bonding fillers for use with the present invention include halogen compounds, carbonates, oxides and sulphur compounds. Other fillers will be known to those skilled in the art. The bonded abrasives may be reinforced by glass cloths.

According to a second aspect of the present invention there is provided a method of cutting a pipe by means of a cutting device according to the first aspect of the present invention comprising the steps of:
supporting a pipe to be cut in the pipe supporting means;
rotating the pipe cutting means about its own central axis at a suitable cutting speed;
contacting the rotating pipe cutting means with the pipe during relative circumferential rotation of the pipe and the pipe cutting means;
radially adjusting the position of the pipe cutting means with respect to the pipe to cut through the wall of the pipe and leave a chamfered edge on the pipe section with respect to which the pipe cutting means is at an acute angle.

Preferably, the method of the second aspect of the present invention may utilise a cutting device having any one or more of the preferred features of the first aspect of the present invention.

An embodiment of the invention will now be described with reference to the accompanying drawings in which:-
Figure 1 shows a cutting device in accordance with the present invention;
Figure 2 shows a cross section through a pipe and cutting disc during cutting of a pipe in accordance with the present invention;
Figure 3 is a schematic front view of a second embodiment of cutting device; and
Figure 4 is a schematic end view of the second embodiment.

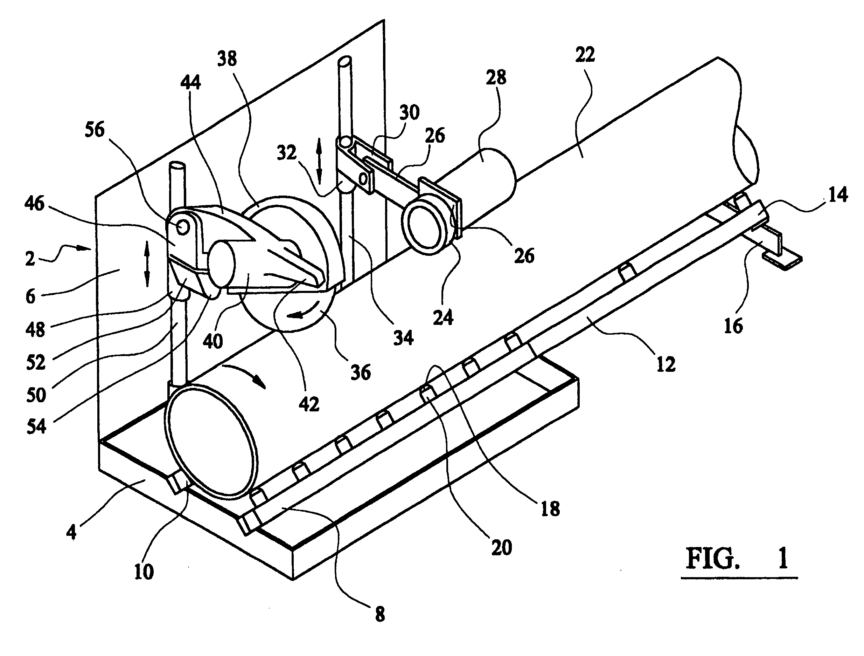

Referring to figure 1, a cutting device 2 comprises a rectangular base plate 4 having an upright shielding wall 6 extending vertically upward from one side thereof. A pair of longitudinal fixed rails 8, 10 extend in spaced parallel relationship with each other along the length of the rectangular base and are spaced inwardly and parallel with the longer sides thereof. Each fixed rail includes a variable length extension component 12 which is mated with the end of the fixed rail 8 by means of overlapping ends and a fixing pin (not shown) to provide a variable length support rail. The support rail extension rail includes a support rail 16 which depends from the remote end 14 thereof. The height of the support rail matches the height of the base plate 4 so that the extension rail is maintained at an equivalent height as the fixed rail part 8. A plurality of aligned spaced roller bearings 18 are mounted along the length of the fixed rail 8 and extension rail 12 on fixed mounts 20. Each roller bearing 18 is freely rotatable within fixed mount 20. Each of the mounts are provided with a suitable bearing receiving socket (not shown). A matching series of spaced roller bearings are formed on opposite fixed rail 10 and extension rail (not shown). Part of a pipe 22 is shown supported on the roller bearings 18 so that the pipe is cradled between the two spaced support rails 8, 10. A rubber tyred disc drive 24 is shown engaging the upper surface of the pipe 22 which urges the pipe against the bearings and rotates the pipe about the pipe's longitudinal axis. The rubber tyred drive rotates about an axis parallel with the longitudinal axis of the pipe and is mounted on a mounting plate 26 which includes a motor 28 mounted on the opposite side thereof and communicating with the rubber tyred drive by means of a shaft which extends through the plate and drives the rubber tyre in an anti-clockwise manner. The mounting plate 26 includes an arm 28 which extends laterally and distally therefrom to be fixed at its other end in a jaw bracket 30 which, in turn, is welded to a sleeve 32 which is vertically slideable on close fitting vertical rod 34 mounted on the base plate 4. The sleeve 32 is vertically slideable on the rod 34 so that the tyre drive may engage various diameter pipes mounted on the roller bearings 18. By engaging the tyre drive 24 with the pipe 22 mounted on the roller bearings 18, the pipe is rotated clockwise due to the anti-clockwise motion of the rubber tyre drive.

A bonded abrasive cutting grinder 36 is shown in the form of a disc and includes a guard 38 so that only the lower portion of the disc 36 is exposed. The disc 36 is journalled in the motor 40 which includes a control arm 40 extending laterally and proximally therefrom and a support arm 44 which extends laterally and distally therefrom on the opposite side to the control arm 42 and is pivotally mounted in jaw bracket 46 which in turn is mounted on vertically reciprocatable sleeve 48 as will be explained in further detail. As with the rubber tyred socket 32, the cutting disc sleeve 48 is vertically slideable on vertical rod 50 which is mounted on the base plate 4. The jaw bracket 46 is mounted on the sleeve via a horizontal pivot housing 52 which includes a central horizontal pivot 54 which extends into the sleeve member 48 at right angles to the axis of the pipe so that the grinding cutter disc 36 may be pivoted to the angle required for the bevelled edge to be formed during cutting of the pipe section. In addition, the support arm 44 is journalled in the jaw bracket 46 by means of horizontal pin 56, at right angles to the pivot 54, so that the cutting disc 36 may be lifted clear of the pipe 22 by means of control arm 42. In use, when cutting is required, the sleeve 48 is raised or lowered to the required height to cut the particular pipe and the angle at which the pipe will be cut is set by rotation about pivot 54. Finally, to engage the clockwise rotating cutting disc 36, the control arm 42 is urged downwardly against the pipe which is being urged to rotate clockwise by the tyre drive 24.

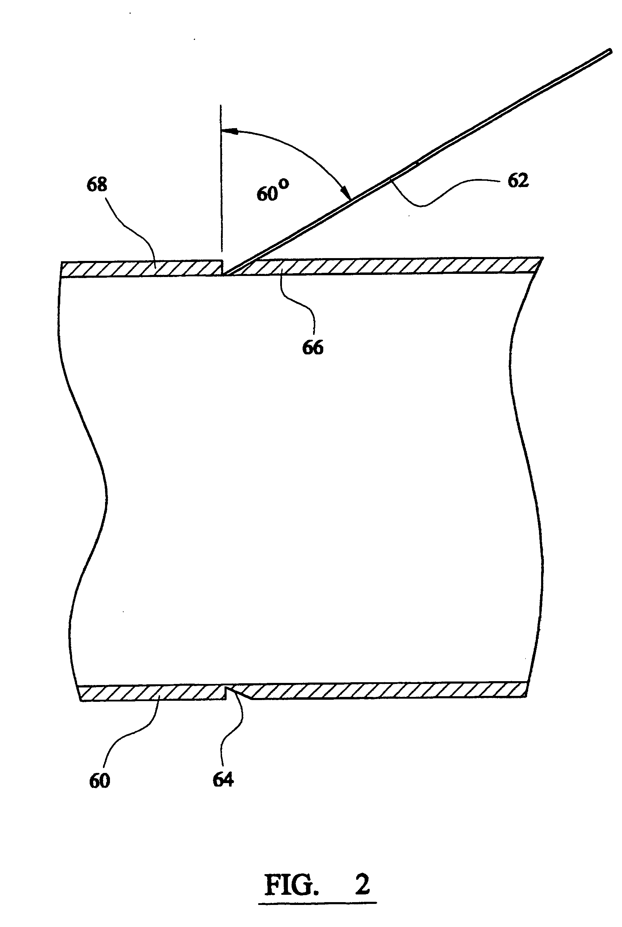

The effect of the cutting action previously described, is shown more clearly in figure 2 where a partial view of pipe section 60 is shown after operation of the cutting disc 32 which is shown at an angle of 60° with respect to a theoretically vertical cutting disc. The effect is to provide a chamfered edge 64 on the pipe section in accordance with the angle at which the cutting disc has been set. The illustration in figure 2 is shown just prior to the completion of the cutting action when the two sections of the pipe will separate. Although the leading edge of the pipe section 66 is shown with a chamfered edge 64, the trailing edge of the other pipe section 68 has a substantially vertical cut.

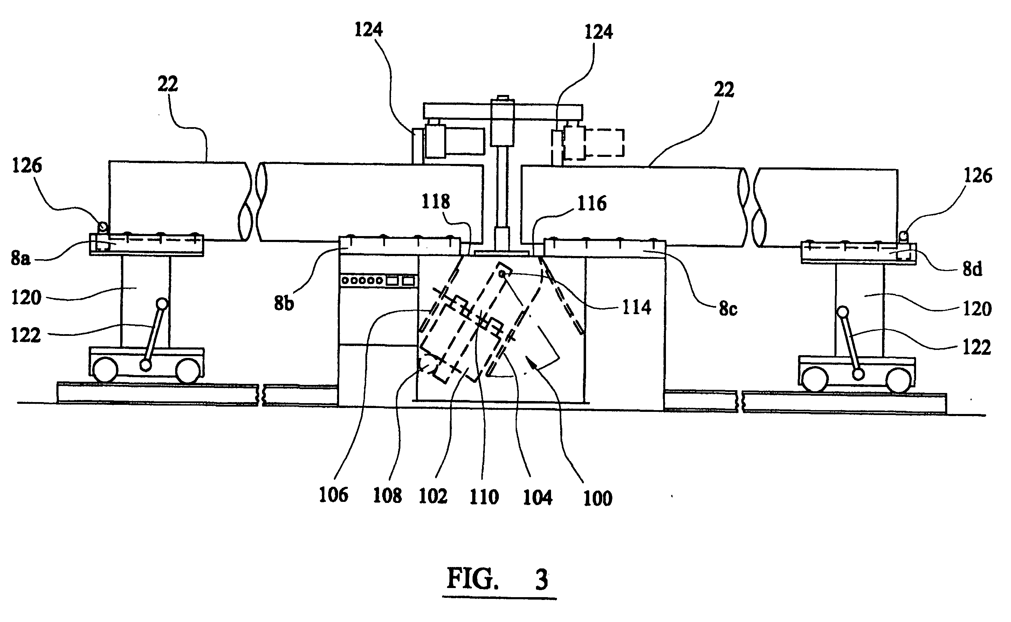

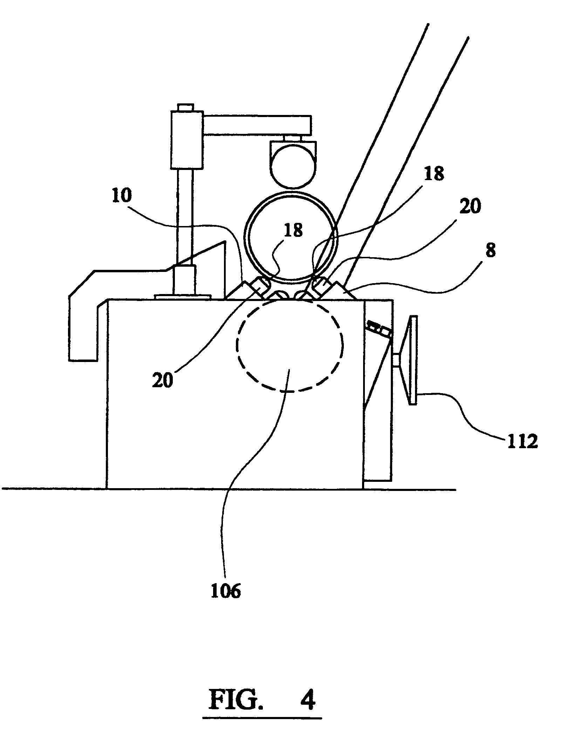

Figures 3 and 4 show an alternative embodiment of cutting device, which uses the same principal as that described in relation to Figures 1 and 2.

The device in Figure 3 comprises a pivotable cutter drive support section 100 which comprises a cutter drive unit 102, a right hand cutter disc 104 and a left hand cutter disc 106. The cutter discs 104 and 106 are of the same material and construction of those described above.

The support unit 100 also includes a cutter feed drive motor 108 which drives a support bracket 110 backwards and forwards to move the cutter discs 104 and 106 in the direction of their plane of rotation.

The drive support unit 100 is pivotable about fulcrum 114 by adjustment of a geared handwheel 112 (see Figure 4).

The pivotable adjustment of the support unit 100 allows for different angles of cutting for production of a chamfered edge as described above of a pipe 22. The cutting angle may be varied up to 35° to either side of a vertical centre line.

It is important to note with this embodiment that the cutting discs 104 and 106 are moved in line with the plane of the discs and the plane of rotation, so feeding of the cutting discs as it cuts into a pipe would be at an angle of, for example, 30°, where the cutting angle was chosen to be 30°. Similarly, a vertical cut into a pipe (i.e. at 90° to the longitudinal axis of the pipe) would result in vertical thrusting of the cutting discs 104 and 106. The right hand cutter disc 104 is fed upwards through an opening 116 towards the pipe 22. The left hand cutter disc 106 extends upwards towards the 22 through an opening 118.

Only one of the cutter discs 104, 106 is engaged at a time so that only one disc is rotated for cutting and for feeding upwards towards a pipe 22 at a time. The other disc remains stationery and held beneath the support rails 8, 10 (see Figure 4).

Each support rail 8 is split into sections. A left hand section is split into a section labelled 8a in Figure 3 which is supported on a movable trolley 120 which can extend the support rail to support a pipe of 6 metres in length. Similarly, the support rail 10 is split into two sections on the left hand side of this embodiment. On the right hand side the rail 8 is split into sections 8c and 8d, with the section 8d also being supported on an adjustable trolley to allow a maximum length of pipe 22 of 6 metres. The trolleys are moveable and can be locked in position with a lever 122.

As can be seen from Figure 3 this embodiment can support two sections of pipe, one to the left of the cutting assembly and one to the right of the cutting assembly. Each side of the device has a motorised drive wheel 124, which is arranged to have a rotational axis slightly off parallel with the central axis of the pipe 22, such that when rotated by the drive wheel 124, the pipe is urged towards an end stop 126. The use of the end stop and slightly misaligned tracking of the drive wheel 124 allows the pipe 22 to be held accurately in position relative to the cutter discs 104, 106 for accurate cutting. The drive wheel assembly is otherwise the same as that described in relation to Figures 1 and 2.

In use, a section of pipe 22 is placed on one side of the device, either to the right or to the left. The end stop 126 is then set in position to allow a chosen length of pipe 22 to be cut. Then, the geared hand wheel 112 is manipulated to select the right hand cutter disc 104 or the left hand cutter disc 106, whichever is required, and also to select the angle of cut for the resulting chamfer on the pipe 22. The cutter disc 104/106 is then switched on to its cutting speed and the drive wheel 124 is also started to turn causing the pipe 22 to turn and also be pushed against the end stop 126. The cutter feed drive motor 108 is then activated to feed the cutter disc 104/106 at its chosen angle upwards towards the pipe 22 for cutting. The feed motor gradually feeds the disc in the direction of the plane of rotation of the cutter disc towards the pipe until a groove as shown in Figure 2 is cut into the pipe and eventually the pipe is cut into two pieces with the cut end having been simultaneously prepared for use. The cutter disc is then withdrawn and the drive wheel 124 disengaged. After that, the pipe is moved to the other side of the device along rollers mounted on the rails, to allow a rear end of the pipe to be cut. Consequently, the recently cut pipe of the end with its chamfer is pushed up to the opposite end stop 126, a cutter disc 104/106 is selected and the cutting operation is repeated. Thus, a section of pipe can have both ends chamfered without need for picking the pipe up and turning it around, as would previously have been the case. Great time savings are encountered with this embodiment of device. The operation of one cut can be reduced from a previous time of twenty minutes to a time of two minutes with the machine described above.

The invention provides the possibility of cutting and preparing the chamfered edge of the pipe in a single operation which has not hitherto been possible. In addition, the automated manner in which the chamfered edge is prepared ensures high speed and a high quality in the final chamfer compared with standard grinding.techniques.

## Claims

1. A pipe cutting device (2) comprising pipe cutting means (36), pipe supporting means (18, 20, 8, 10) for supporting a pipe (22) during the cutting thereof, the pipe cutting means (36) being relatively rotatable with respect to the circumference of a pipe (22) supported by the supporting means (18, 20, 8, 10) and being radially adjustable with respect to the central longitudinal axis of a pipe (22) supported by the supporting means (18, 20, 8, 10), wherein the pipe cutting means (36) is operable to cut a pipe (22) by rotation about the central axis of the cutting means (36) which central axis extends at an angle with respect to the central longitudinal axis of a pipe (22) supported by the supporting means (18, 20, 8, 10), the pipe cutting means (36) are abrasive pipe cutting means, **characterized in that** the pipe cutting device (2) is further operable to feed the cutting means (36) towards the pipe (22) during multiple rotations of the pipe (22) to thereby cut a groove in the pipe (22) and then cut through the pipe (22); wherein the supporting means (18, 20, 8, 10) incorporates an end stop (126) against which drive means (24) are arranged to drive the pipe (22), wherein the cutting means (36) the line of a plane of rotation of the cutting means (36) and wherein an outer edge of the cutting means provides a cutting surface, to thereby allow cutting and preparation of a pipe (22) in a single operation.

2. A pipe cutting device (2) as claimed in claim 1, in which the angle of the central axis of the pipe (22) to the central axis of the cutting means (36) is between about 50° and about 80°.

3. A pipe cutting device (2) as claimed in any preceding claim, in which the pipe (22) is rotated about its central longitudinal axis to provide the said relative circumferential rotation of the pipe cutting means (36) and the pipe (2).

4. A pipe cutting device (2) as claimed in any preceding claim, in which the rotation of the cutting means (36) about its own axis and the rotation of the pipe (22) are in the same direction.

5. A pipe cutting device (2) as claimed in any preceding claim which is radially adjustable with respect to the central longitudinal axis of the pipe (22) to the extent necessary to effect cutting through the wall of the pipe (22) .

6. A pipe cutting device (2) as claimed in claim 3, in which a drive wheel (24) engages the pipe (22) and is operable to rotate the pipe (22) along its longitudinal axis during the cutting thereof.

7. A pipe cutting device (2) as claimed in any preceding claim, in which the pipe (22) is supported on a series of longitudinally spaced roller bearings (18) which are mounted on a pair of spaced parallel extension rails (8, 10) which extend longitudinally with respect to a pipe (22) located thereon.

8. A pipe cutting device (2) as claimed in claim 3 or claim 7, in which the rails (8, 10) extend to either side of the cutting means (36) and in which a drive wheel (124) is located at each side of the cutting means (36).

9. A pipe cutting device (2) as claimed in either claim 6 or claim 8, in which the axis of rotation of the drive wheel (24, 124) may be off parallel with the axis of the pipe (22) to give a lateral force on the pipe (22), which results in the pipe (22) being pushed against the end stop (126) on the rails (8, 10) .

10. A cutting device (2) as claimed in any preceding claim, in which the cutting means (36) are located beneath the supporting means (18, 20, 8, 10) and are mounted for upward movement towards a pipe (22) to be cut.

11. A cutting device (2) as claimed in any preceding claim, in which the cutting means (36) are adjustable to vary the angle between a central axis of the pipe (22) and a rotational axis of the cutting means (36).

12. A cutting device (2) as claimed in any preceding claim, in which the cutting means (36) comprises two blades (104, 106), which are mounted parallel to one another and are mounted on a common support (110).

13. A cutting device (2) as claimed in claim 12, in which the common support (110) allows a first blade (104) to cut a pipe (22) at or to a first side of a vertical and a second blade (106) to cut a pipe (22) at or to a second side of a vertical.

14. A method of cutting a pipe (22) by means of a cutting device (2) according to any one of claims 1-13 comprising the steps of:-
supporting a pipe (22) to be cut in the pipe supporting means (18, 20, 8, 10);
rotating pipe cutting means (36) about its own central axis at a suitable cutting speed;
contacting the rotating pipe cutting means (36) with the pipe (22) during relative circumferential rotation of the pipe (22) and the pipe cutting means (36);
radially adjusting the position of the pipe cutting means (36) with respect to the pipe (22) to cut through the wall of the pipe (22) and leave a chamfered edge (24) on the pipe section with respect to which the pipe cutting means (36) is at an acute angle,
wherein the pipe cutting means (36) during multiple rotations of the pipe (22) cause a groove to be cut in the pipe (22) prior to the cut being made through the wall of the pipe (22).

## Patentansprüche

1. Rohrschneidevorrichtung (2), umfassend eine Rohrschneideeinrichtung (36), eine Rohrstützeinrichtung (18, 20, 8, 10) zum Stützen eines Rohrs (22) während seines Schneidens, wobei die Rohrschneideeinrichtung (36) relativ bezogen auf den Umfang eines Rohrs (22) drehbar ist, welches durch die Stützeinrichtung (18, 20, 8, 10) gestützt wird, und bezüglich der Mittellängsachse eines Rohrs (22) radial einstellbar ist, weiches durch die Stützeinrichtung (18, 20, 8, 10) gestützt wird, wobei die Rohrschneideeinrichtung (36) dazu ausgelegt ist, ein Rohr (22) durch Drehung um die Mittelachse der Schneideeinrichtung (36) zu zerschneiden, welche Mittelachse unter einem Winkel bezüglich der Mittellängsachse eines Rohrs (22) verläuft, welches durch die Stützeinrichtung (18, 20, 8, 10) gestützt wird, wobei die Rohrschneideeinrichtung (36) eine Schleif-Schneideeinrichtung ist, **dadurch gekennzeichnet, dass** die Rohrschneidevorrichtung (2) ferner dazu ausgelegt ist, die Schneideeinrichtung (36) zum Rohr (22) während mehrerer Drehungen des Rohrs (22) zuzuführen, um hierdurch eine Rille in das Rohr (22) zu schneiden, und dann das Rohr (22) durchzuschneiden, wobei die Stützeinrichtung (18, 20, 8, 10) einen Endanschlag (126) aufweist, gegen den eine Antriebseinrichtung (24) zum Antreiben des Rohrs (22) angeordnet ist, wobei die Schneideeinrichtung (36) dazu ausgelegt ist, zum Rohr (22) hin entlang der Linie einer Drehebene der Schneideeinnchtung (36) bewegt zu werden, und wobei eine Aussenkante der Schneideeinrichtung eine Schneidoberfläche bereitstellt, um hierdurch das Schneiden und Bereitstellen eines Rohrs (22) in einem einzigen Arbeitsschritt zu ermöglichen.

2. Rohrschneidevorrichtung (2) nach Anspruch 1, bei der der Winkel zwischen der Mittelachse des Rohrs (22) und der Mittelachse der Schneideeinrichtung (36) zwischen ungefähr 50° und ungefähr 80° beträgt.

3. Rohrschneidevorrichtung (2) nach einem der vorhergehenden Ansprüche, bei der das Rohr (22) um seine Mittellängsachse gedreht wird, um die Relativumfangsdrehung der Rohrschneideeinrichtung (36) und des Rohrs (2) bereitzustellen.

4. Rohrschneidevorrichtung (2) nach einem der vorhergehenden Ansprüche, bei der die Drehung der Schneideeinrichtung (36) um ihre eigene Achse sowie die Drehung des Rohrs (22) in der gleichen Richtung erfolgen.

5. Rohrschneidevorrichtung (2) nach einem der vorhergehenden Ansprüche, die in dem Maße radial bezüglich der Mittellängsachse des Rohrs (22) einstellbar ist, wie erforderlich ist, um die Wand des Rohrs (22) zu durchschneiden.

6. Rohrschneidevorrichtung (2) nach Anspruch 3, bei der ein Antriebsrad (24) am Rohr (22) angreift und dazu ausgelegt ist, das Rohr (22) während seines Schneidens um seine Längsachse zu drehen.

7. Rohrschneidevorrichtung (2) nach einem der vorhergehenden Ansprüche, bei der das Rohr (22) auf einer Reihe von in Längsrichtung beabstandeten Rollenlagern (18) gestützt wird, welche auf einem Paar von beabstandeten parallelen Verlängerungsschienen (8, 10) montiert sind, die sich bezüglich eines darauf angeordneten Rohrs (22) in Längsrichtung erstrecken.

8. Rohrschneidevorrichtung (2) nach Anspruch 3 oder Anspruch 7, bei der sich die Schienen (8, 10) auf jeder Seite der Schneideeinrichtung (36) erstrecken, und bei der ein Antriebsrad (124) an jeder Seite der Schneideeinrichtung (36) angeordnet ist.

9. Rohrschneidevorrichtung (2) nach Anspruch 6 oder Anspruch 8, bei der die Drehachse des Antriebsrads (24, 124) nicht-parallel zur Achse des Rohrs (22) sein kann, um eine Lateralkraft auf das Rohr (22) auszuüben, was dazu führt, dass das Rohr (22) gegen den Endanschlag (126) an den Schienen (8, 10) gedrückt wird.

10. Schneidevorrichtung (2) nach einem der vorhergehenden Ansprüche, bei der die Schneideeinrichtung (36) unter der Stützeinrichtung (18, 20, 8, 10) angeordnet ist und für eine Aufwärtsbewegung hin zu einem zu schneidenden Rohr (22) montiert ist.

11. Schneidevorrichtung (2) nach einem der vorhergehenden Ansprüche, bei der die Schneideeinrichtung (36) zur Veränderung des Winkels zwischen einer Mittelachse des Rohrs (22) und einer Drehachse der Schneideeinrichtung (36) einstellbar ist.

12. Schneidevorrichtung (2) nach einem der vorhergehenden Ansprüche, bei der die Schneideeinrichtung (36) zwei Klingen (104, 106) umfasst, die parallel zueinander montiert sind und auf einem gemeinsamen Träger (110) montiert sind.

13. Schneidevorrichtung (2) nach Anspruch 12, bei der der gemeinsame Träger (110) es einer ersten Klinge (104) ermöglicht, ein Rohr (22) an einer oder auf eine erste Seite einer Vertikalen zu schneiden, und einer zweiten Klinge (106) ermöglicht ein Rohr (22) an einer oder auf eine zweite Seite einer Vertikalen zu schneiden.

14. Verfahren zum Schneiden eines Rohrs (22) mittels einer Schneidevorrichtung (2) nach einem der Ansprüche 1-13, umfassend die Schritte:
Stützen eines zu schneidenden Rohrs (22) in der Rohrstützeinrichtung (18, 20, 8, 10);
Drehen der Rohrschneideeinrichtung (36) um ihre eigene Mittelachse mit einer geeigneten Schneidegeschwindigkeit;
In-Kontakt-Bringen der Schneideeinrichtung (36) für das sich drehende Rohr mit dem Rohr (22) während einer Relativumfangsdrehung des Rohrs (22) und der Rohrschneideeinrichtung (36);
radiales Einstellen der Position der Rohrschneideeinrichtung (36) relativ zum Rohr (22), um die Wand des Rohrs (22) zu durchschneiden und eine abgeschrägte Kante (24) am Rohrabschnitt übrig zu lassen, bezüglich dem die Rohrschneideeinrichtung (36) einen spitzen Winkel einnimmt,
wobei die Rohrschneideeinrichtung (36) während mehrerer Drehungen des Rohrs (22) das Schneiden einer Rille in das Rohr (22) bewirkt, bevor die Wand des Rohrs (22) durchgeschnitten wird.

## Revendications

1. Dispositif de coupe de tuyaux (2) comprenant des moyens de coupe de tuyaux (36), des moyens de support de tuyaux (18,20,8,10) pour supporter un tuyau (22) pendant sa coupe, les moyens de coupe de tuyaux (36) étant relativement rotatifs par rapport à la circonférence d'un tuyau (22) monté sur les moyens de support (18,20,8,10) et pouvant être ajustés radialement par rapport à l'axe longitudinal central d'un tuyau (22) monté sur les moyens de support (18,20, 8,10), dispositif dans lequel les moyens de coupe de tuyaux (36) peuvent être actionnés pour couper un tuyau (22) par rotation autour de l'axe central des moyens de coupe (36) , lequel axe central s'étend selon un angle par rapport à l'axe longitudinal central d'un tuyau (22) monté sur les moyens de support (18,20,8,10), les moyens de coupe de tuyaux (36) étant des moyens de coupe de tuyaux abrasifs,
**caractérisé en ce que**,
le dispositif de coupe de tuyaux (2) peut de plus être actionné pour amener les moyens de coupe (36) en direction du tuyau (22) pendant les rotations multiples du tuyau (22) permettant ainsi de découper une gorge dans le tuyau (22) et ensuite de couper entièrement le tuyau (22); **en ce que** les moyens de support (18, 20, 8, 10) intègrent une butée d'extrémité (126) contre laquelle sont disposés des moyens d'entraînement (24) pour entraîner le tuyau (22); **en ce que** les moyens de coupe (36) peuvent être actionnés pour se déplacer en direction du tuyau (22) le long de la ligne d'un plan de rotation des moyens de coupe (36) et **en ce qu'**un bord extérieur des moyens de coupe offre une surface de coupe, permettant ainsi d'effectuer en une seule opération la coupe et la préparation d'un tuyau (22).

2. Dispositif de coupe de tuyaux (2) selon la revendication 1, dans lequel l'angle de l'axe central du tuyau (22) par rapport à l'axe central des moyens de coupe (36) est compris entre 50° et 80° environ.

3. Dispositif de coupe de tuyaux (2) selon l'une quelconque des revendications précédentes, dans lequel le tuyau (22) est mis en rotation autour de son axe longitudinal central pour assurer ladite rotation circonférentielle relative des moyens de coupe de tuyaux (36) et du tuyau (2).

4. Dispositif de coupe de tuyaux (2) selon l'une quelconque des revendications précédentes, dans lequel la rotation des moyens de coupe (36) autour de leur propre axe et la rotation du tuyau (22) sont dans la même direction.

5. Dispositif de coupe de tuyau (2) selon l'une quelconque des revendications précédentes, qui est radialement ajustable par rapport à l'axe longitudinal central du tuyau (22) dans la mesure nécessaire pour effectuer une coupe à travers la paroi du tuyau (22).

6. Dispositif de coupe de tuyau (2) selon la revendication 3, dans lequel une roue d'entraînement (24) est en prise avec le tuyau (22) et peut être actionnée pour faire tourner le tuyau (22) le long de son axe longitudinal pendant sa coupe.

7. Dispositif de coupe de tuyau (2) selon l'une quelconque des revendications précédentes, dans lequel le tuyau (22) est monté sur une série de paliers à rouleaux (18) espacés longitudinalement qui sont logés sur une paire de rails de prolongement parallèles espacés (8,10) qui s'étendent longitudinalement par rapport à un tuyau (22) situé sur ceux-ci.

8. Dispositif de coupe de tuyaux (2) selon la revendication 3 ou la revendication 7, dans lequel les rails (8,10) s'étendent de chaque côté des moyens de coupe (36) et dans lequel une roue d'entraînement (124) est située de chaque côté des moyens de coupe (36).

9. Dispositif de coupe de tuyaux (2) selon la revendication 6 ou la revendication 8, dans lequel l'axe de rotation de la roue d'entraînement (24,124) peut être non parallèle à l'axe du tuyau (22) pour conférer une force latérale sur le tuyau (22), ce qui a pour effet de pousser le tuyau (22) contre la butée d'extrémité (126) sur les rails (8,10).

10. Dispositif de coupe (2) selon l'une quelconque des revendications précédentes, dans lequel les moyens de coupe (36) sont situés au-dessous des moyens de support (18,20,8,10) et sont montés pour un mouvement ascendant en direction d'un tuyau (22) à couper.

11. Dispositif de coupe (2) selon l'une quelconque des revendications précédentes, dans lequel les moyens de coupe (36) sont ajustables pour faire varier l'angle entre un axe central du tuyau (22) et un axe de rotation des moyens de coupe (36).

12. Dispositif de coupe (2) selon l'une quelconque des revendications précédentes, dans lequel les moyens de coupe (36) comprennent deux lames (104,106) qui sont montées parallèlement entre elles et sont situées sur un support commun (110).

13. dispositif de coupe (2) selon la revendication 12, dans lequel le support commun (110) permet à une première lame (104) de couper un tuyau (22) à ou sur un premier côté d'une verticale et une seconde lame (106) pour couper un tuyau (22) à ou sur un second côté d'une verticale.

14. Procédé de coupe d'un tuyau (22) au moyen d'un dispositif de coupe (2) selon l'une quelconque des revendications 1-13 comprenant les étapes consistant à :
monter un tuyau (22) à couper dans les moyens de support de tuyaux (18, 20, 8, 10);
mettre en rotation les moyens de coupe de tuyau (36) autour de son propre axe central à une vitesse de coupe appropriée;
mettre en contact les moyens de coupe de tuyau (36) en rotation avec le tuyau (22) pendant la rotation circonférentielle relative du tuyau (22) et les moyens de coupe de tuyau (36);
ajuster radialement la position des moyens de coupe de tuyau (36) par rapport au tuyau (22) pour couper à travers la paroi du tuyau (22) et laisser un bord chanfreiné (24) sur la section de tuyau par rapport auquel les moyens de coupe de tuyau (36) forment un angle aigu;
procédé dans lequel, pendant les rotations multiples du tuyau (22), les moyens de coupe de tuyau (36) font en sorte de découper une gorge à travers la paroi du tuyau (22).
